# EUROPEAN PATENT APPLICATION

(11) **EP 4 841 783 A1**
(43) Date of publication of application: **18.11.2026**
(21) Application number: 25777421.6
(22) Date of filing: 25.03.2025
(51) Int. Cl.: H01M 50/367, H01M 50/24

(54) **BATTERY BOX, BATTERY AND ELECTRIC DEVICE**

(30) Priority: 29.03.2024 CN 202420629213 U
(71) Applicant: Contemporary Amperex Technology Co., Limited, Ningde, Fujian 352100 (CN)
(72) Inventor: WU, Kai, Ningde, Fujian 352100 (CN); QUAN, Chao, Ningde, Fujian 352100 (CN); LI, Yao, Ningde, Fujian 352100 (CN); LI, Wei, Ningde, Fujian 352100 (CN)
(74) Representative: Ziebig Hengelhaupt Intellectual Property Attorneys Patentanwaltskanzlei PartGmbB
(86) International application number: PCT/CN2025/084805
(87) International publication number: WO 2025/201349

(57) **Abstract**

The present application provides a battery box, a battery and an electric device. The battery box comprises a box body, a partition plate and support members, wherein the box body comprises a bottom plate and a cavity located above the bottom plate; the partition plate is located in the cavity and spaced apart from the bottom plate in a first direction, so as to divide the cavity into an electrical cavity and an exhaust cavity; the electrical cavity is located on the side of the partition plate away from the bottom plate, and the electrical cavity is used for containing a battery cell; the exhaust cavity is located on the side of the partition plate facing the bottom plate, and the exhaust cavity is used for collecting emissions from the battery cell; and the support members are provided in the exhaust cavity, and the support members are supported on the bottom plate and/or the partition plate in the first direction to improve the deformation resistance of the partition plate, so as to mitigate the problem that when thermal runaway occurs in the battery, the partition plate is bent and deformed under pressure, which leads to a reduction in the volume of the exhaust cavity, resulting in that some of high-temperature ejecta cannot enter the exhaust cavity, and other battery cells are damaged. The reliability of the battery box is improved.

## Description

### CROSS-REFERENCE TO RELATED APPLICATIONS

The present application claims priority to Chinese Patent Application No. 202420629213.X filed on March 29, 2024 and entitled "BATTERY BOX, BATTERY AND ELECTRICAL APPARATUS", the entire content of which is incorporated herein by reference.

### TECHNICAL FIELD

The present application relates to the technical field of batteries, in particular to a battery box, a battery and an electrical apparatus.

### BACKGROUND

Lithium-ion power batteries have properties such as high operating voltage, high specific energy, small size, light weight, long cycle life, low self-discharge rate, no memory effect, and no pollution, which make them popular with many power equipment manufacturers. With the vigorous development of lithium batteries, the safety issue of the batteries is of great interest.

In a lithium battery system, when some battery cells experience thermal runaway, a containing cavity is usually arranged inside a battery box to contain high-temperature ejecta from the runaway battery cells in order to reduce the damage caused by the runaway battery cells to other normal battery cells.

However, containing cavities in the prior art have insufficient capacity of containing the high-temperature ejecta, and their reliabilities need to be improved.

### SUMMARY

In view of the above problems, the present application provides a battery box, a battery and an electrical apparatus, which can improve the capacity of a containing cavity in the battery box to contain high-temperature ejecta and prolong the battery's service life.

In a first aspect, the present application provides a battery box, including: a box body, including a bottom plate and a cavity located above the bottom plate; a partition plate, wherein the partition plate is located in the cavity and spaced apart from the bottom plate in a first direction, so as to divide the cavity into an electrical cavity and an exhaust cavity, the electrical cavity is located on the side of the partition plate away from the bottom plate, the electrical cavity is configured to contain a battery cell, and the exhaust cavity is configured to collect emissions from the battery cell; and a support member, located in the exhaust cavity and being supported on the bottom plate and/or the partition plate in the first direction.

In solutions of embodiments of the present application, the battery box includes a box body, a partition plate and a support member, wherein the box body includes a bottom plate and a cavity located above the bottom plate; the partition plate is located in the cavity and spaced apart from the bottom plate in a first direction, so as to divide the cavity into an electrical cavity and an exhaust cavity; the electrical cavity is located on the side of the partition plate away from the bottom plate, and the electrical cavity is configured to contain a battery cell; the exhaust cavity is located on the side of the partition plate facing the bottom plate, and the exhaust cavity is configured to collect emissions from the battery cell; and the support member is arranged in the exhaust cavity and is supported the bottom plate and/or the partition plate in the first direction to improve the deformation resistance of the partition plate, so as to mitigate the problem that when thermal runaway occurs to the battery, the partition plate is bent and deformed under pressure, which leads to a reduction in a volume of the exhaust cavity, resulting in that some of high-temperature ejecta cannot enter the exhaust cavity, and other battery cells are damaged. The reliability of the battery box is improved.

In some embodiments, the partition plate is provided with a pressure relief portion, the support member has an avoidance portion, and the avoidance portion and the pressure relief portion are opposite to each other in the first direction.

In the solutions of the embodiments of the present application, the partition plate is provided with the pressure relief portion, the pressure relief portion is configured to correspond to a pressure relief structure of the battery cell, and the avoidance portion and the pressure relief portion are opposite to each other in the first direction, so that the battery emissions may enter the exhaust cavity via the pressure relief portion and the avoidance portion. Thus, by making the avoidance portion of the support member opposite to the pressure relief portion in the first direction, when the pressure relief portion is not in operation, the support member improves the deformation resistance of the partition plate nearby the pressure relief portion, and when the pressure relief portion is in operation, the emissions may rapidly enter the exhaust cavity via the avoidance portion, and the reliability of the battery box is improved.

In some embodiments, the avoidance portion is a first through hole, one end of the first through hole is arranged facing the pressure relief portion, and/or the avoidance portion is a meltable channel.

In the solutions of the embodiments of the present application, the avoidance portion is the first through hole, so that the battery emissions enter the exhaust cavity through the first through hole via the pressure relief portion, a pressure relief speed is improved, the reliability of the battery box is improved, and/or the avoidance portion is the meltable channel, so that the battery emissions enter the exhaust cavity by melting the avoidance portion by the pressure relief portion, and when the avoidance portion is not melted, a supporting portion provides a better effect of supporting the partition plate.

In some embodiments, the partition plate is provided with the pressure relief portion, and projections of the support member and the pressure relief portion are staggered in the first direction.

In the solutions of the embodiment of the present application, the partition plate is provided with the pressure relief portion, so that the emissions of the battery cell may enter the exhaust cavity via the pressure relief portion, and the projections of the support member and the pressure relief portion in the first direction are staggered, so that the risk of reduction of battery pressure relief efficiency caused by the support member interfering with the pressure relief portion is reduced.

In some embodiments, the pressure relief portion includes a pressure relief hole and/or a weak structure.

In the solutions of the embodiments of the present application, the pressure relief portion includes the pressure relief hole to improve the pressure relief rate of the battery, and/or the pressure relief portion includes the weak structure. When the weak structure is in operation, the battery emissions may rapidly enter the exhaust cavity through the pressure relief portion, while the weak structure can improve the integrity of the electrical cavity when it is not in operation.

In some embodiments, the support member includes a second through hole penetrating therethrough in a second direction or a third direction, and a plane formed by the second direction and the third direction is perpendicular to the first direction.

In the solutions of the embodiments of the present application, the support member includes the second through hole penetrating therethrough in the second direction or the third direction, that is, a weight of the support member and material cost of the support member can be reduced, and gas can conveniently pass through the support member, so as to rapidly balance a gas pressure in the exhaust cavity and improve an effect of the exhaust cavity for containing the battery emissions.

In some embodiments, a plurality of support members are arranged at intervals.

In the solutions of the embodiments of the present application, the plurality of support members are arranged at intervals, so as to reduce interference of the support member with gas in the exhaust cavity, conveniently and rapidly balance the gas pressure in the exhaust cavity and reduce the risk that the emissions overflow into the electrical cavity caused by too high pressure in the exhaust cavity.

In some embodiments, the partition plate is provided with a plurality of pressure relief holes distributed in array in the second direction and/or the third direction, the first direction, the second direction and the third direction intersecting pairwise, and the support members are arranged between the pressure relief holes adjacent to each other in the second direction or the third direction.

In the solutions of the embodiments of the present application, the partition plate is provided with the plurality of pressure relief holes distributed in array in the second direction and/or the third direction. The support members are arranged between the pressure relief holes adjacent to each other in the second direction or the third direction. The pressure relief holes of the runaway battery cell and pressure relief holes of a normal battery cell are separated by the support members to reduce the impact of the runaway battery cell on the normal battery cell.

In some embodiments, the box body further includes a connecting plate, and at least two support members are connected through the connecting plate.

In the solutions of the embodiments of the present application, the box body further includes a connecting plate, and at least two support members are connected through the connecting plate. The connecting plate plays a role in integrating and supporting the support member, so as to conveniently mount and dismount the support member.

In some embodiments, the battery further includes a side plate, the side plate is connected to the bottom plate, and the support member is connected to at least one of the bottom plate, the partition plate and the side plate.

In the solutions of the embodiments of the present application, the battery further includes the side plate, the side plate is connected to the bottom plate, and the support member is connected to at least one of the bottom plate, the partition plate and the side plate so that the support member plays a role in enhancing the structural strength of the box body and/or the partition plate.

In a second aspect, an embodiment of the present application provides a battery, including a battery cell and a battery box according to the embodiment of the first aspect, wherein the battery cell is arranged in an electrical cavity, a partition plate is provided with a pressure relief portion, and a pressure relief structure of the battery cell and the pressure relief portion are opposite to each other in a thickness direction of the partition plate.

In a third aspect, an embodiment of the present application provides an electrical apparatus, including the battery according to the embodiment of the second aspect.

### BRIEF DESCRIPTION OF THE DRAWINGS

By reading the following detailed description of the preferred embodiments, various other advantages and benefits will become clear to those with ordinary skill in the art. The drawings are used for the purpose of illustrating the preferred embodiments only and are not to be considered a limitation to the present application. Moreover, throughout the drawings, like reference numerals represent like components. In the accompanying drawings:
FIG. 1 is a schematic structural diagram of a vehicle in an embodiment of the present application.
FIG. 2 is an exploded schematic diagram of a battery provided by an embodiment of the present application;
FIG. 3 is a schematic structural diagram of a battery module in a battery according to an embodiment of the present application.
FIG. 4 is a section view of a battery according to an embodiment of the present application.
FIG. 5 is a section view of a battery according to another embodiment of the present application.
FIG. 6 is a schematic structural diagram of a support member of a battery box according to an embodiment of the present application.
FIG. 7 is a schematic partial structural diagram of a battery box according to an embodiment of the present application.
FIG. 8 is a schematic partial structural diagram of a battery box according to an embodiment of the present application.
FIG. 9 is a schematic partial structural diagram of a battery box according to an embodiment of the present application.
FIG. 10 is a schematic partial structural diagram of a battery box according to an embodiment of the present application.

Description of reference numerals:
1. Vehicle; 2. Battery; 101. Motor; 102. Controller; 201. Battery module; 3. Battery cell; 4. Battery box; 41. Box body; 411. First box body; 412. Second box body; 413. Electrical cavity; 414. Exhaust cavity; 415. Bottom plate; 417. Cavity;
42. Partition plate; 421. Pressure relief portion;
43. Support member; 431. Avoidance portion; 432. Second through hole; 434. Vent hole; and
44. Connecting plate.

### DETAILED DESCRIPTION OF EMBODIMENTS

Embodiments in technical solutions of the present application will be described in detail below in conjunction with the accompanying drawings. The following embodiments are only used to more clearly illustrate the technical solution of the present application, and therefore are only used as examples and cannot be used to limit the scope of protection of the present application.

It should be noted that, unless otherwise specified, the technical or scientific terms used in the embodiments of the present application should have the usual meanings as understood by those skilled in the art to which the embodiments of the present application belong.

In the description of the embodiments of the present application, orientation or positional relationships indicated by the technical terms "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like are based on the orientation or positional relationships shown in the accompanying drawing, and are only intended for the convenience of describing the embodiments of the present application and simplifying the description, and do not indicate or imply that the apparatus or element referred to must have a specific orientation or be constructed and operated in a specific orientation, and therefore cannot be construed as a restriction on the embodiments of the present application.

In addition, the technical terms "first," "second," etc. are used for descriptive purposes only, and cannot be construed as indicating or implying a relative importance, or implicitly specifying the number of the indicated technical features. In the description of the embodiments of the present application, the meaning of "a plurality of" is two or more, unless otherwise explicitly and specifically defined.

In the description of the embodiments of the present application, unless otherwise explicitly specified and defined, the technical terms "mount," "couple," "connect," "fix", etc., should be understood in a broad sense, for example, a fixed connection, a detachable connection, or an integral connection; or a mechanical connection, or an electrical connection; or a direct connection, an indirect connection through an intermediate medium, or an internal communication of two elements, or interaction between two elements. For those of ordinary skill in the art, the specific meaning of the above terms in the present application may be understood on a case-by-case basis.

Currently, from the development of market situation, the application of power batteries is becoming increasingly more extensive. Power batteries not only have been applied to energy storage power source systems such as hydraulic, firepower, wind and solar power stations, but also have been widely applied to many fields, e.g., electric transportation vehicles such as electric bicycles, electric motorcycles, and electric automobiles, as well as military equipment and aerospace. With the continuous expansion of the application field of power batteries, their market demand is also constantly increasing.

In the present application, a battery cell may include a secondary lithium-ion battery cell, a primary lithium-ion battery cell, a lithium-sulfur battery cell, a sodium lithium-ion battery cell, a sodium-ion battery cell or a magnesium-ion battery cell, etc., which is not limited in the embodiment of the present application.

The battery mentioned in the embodiments of the present application refers to a single physical module that includes one or more battery cells to provide higher voltage and capacity. For example, the battery mentioned in the present application may include a battery module, a battery pack, or the like. The battery generally includes a box body for encapsulating one or more battery cells. A box body can prevent liquid or other foreign matters from affecting charging or discharging of the battery cell.

Lithium-ion power batteries have properties such as high operating voltage, high specific energy, small size, light weight, long cycle life, low self-discharge rate, no memory effect, and no pollution, which make them popular with many power equipment manufacturers. With the vigorous development of lithium batteries, the safety issue of the batteries is of great interest. In a lithium battery system, the partition plate may be used for dividing a battery box into an electrical cavity for containing the battery cell, and a containing cavity. When thermal runaway occurs to the battery cell, high-temperature ejecta may enter the containing cavity through a pressure relief portion, and thus influence of the high-temperature ejecta on other battery cells and other functional components in the electrical cavity is reduced. However, in some batteries, when thermal runaway occurs to the battery cell, the high-temperature ejecta cannot be completely contained within the exhaust cavity.

The above problem is caused by the fact that when thermal runaway occurs to the battery cell, a shell of the battery cell deforms and severely squeezes the partition plate; or the high-temperature ejecta impacts on the partition plate and causes deformation of the partition plate, thus a containing space of the containing cavity is insufficient, and the high-temperature ejecta is spread into the electrical cavity and damages other battery cells.

Based on the above problem, the present application provides a battery box. The battery box includes a box body, a partition plate and a support member. The box body includes a bottom plate and a cavity located above the bottom plate. The partition plate is located in the cavity and spaced apart from the bottom plate in a first direction, so as to divide the cavity into an electrical cavity and an exhaust cavity. The electrical cavity is located on the side of the partition plate away from the bottom plate, and the electrical cavity is configured to contain a battery cell. The exhaust cavity is located on the side of the partition plate facing the bottom plate, and the exhaust cavity is configured to collect emissions from the battery cell. The support member is arranged in the exhaust cavity and is supported on the bottom plate and/or the partition plate in the first direction to improve the deformation resistance of the partition plate, so as to mitigate the problem that when thermal runaway occurs to a battery, the partition plate is bent and deformed under pressure, which leads to a reduction in a volume of the exhaust cavity, resulting in that some of high-temperature ejecta cannot enter the exhaust cavity, and other battery cells are damaged. The reliability of the battery box is improved.

The technical solution described in the embodiments of the present application are applicable to electrical apparatuss using batteries.

The electrical apparatus may be a vehicle, a mobile phone, a portable device, a laptop computer, a ship, a spacecraft, an electric toy, an electric tool, and the like. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric a screwdriver, an electric hammer, an impact drill, a concrete vibrator, and an electric planer. The embodiments of the present application do not make special restrictions on the above electrical apparatuss.

It needs to be understood that the technical solutions described in the embodiments of the present application are not only applicable to the batteries and electrical apparatuss described above, but also applicable to all batteries each including a box body and electrical apparatuss using batteries. However, for the sake of brevity, the following embodiments are described by taking an electric vehicle as an example.

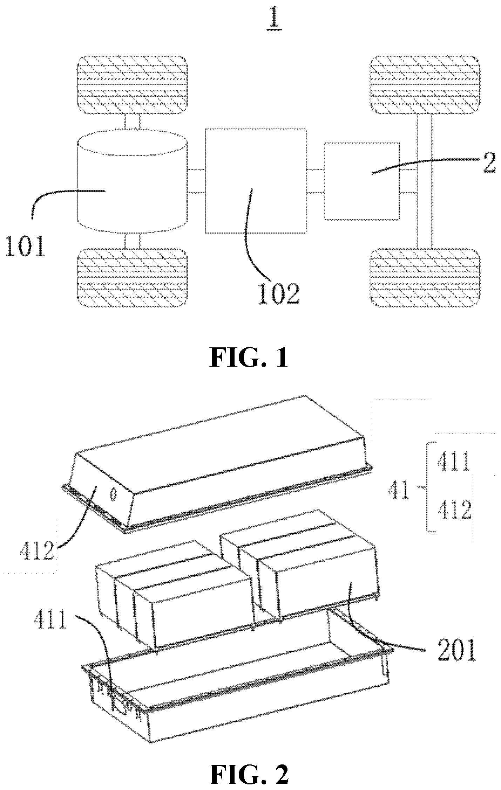

Please refer to FIG. 1, FIG. 1 is a schematic structural diagram of a vehicle 1 according to some embodiments of the present application. The vehicle 1 may be a fuel vehicle, a gas vehicle or a new energy vehicle. The new energy vehicle may be a battery electric vehicle, a hybrid electric vehicle or an extended-range vehicle. A battery 2 is arranged inside the vehicle 1 and may be arranged at a bottom or a head or a tail of the vehicle 1. The battery 2 may be used for supplying power to the vehicle 1. For example, the battery 2 may be used as an operating power source for the vehicle 1. The vehicle 1 may further include a controller 102 and a motor 101. The controller 102 is used to control the battery 2 to supply power to the motor 101, for example, for the operating power demand when the vehicle 1 is starting, navigating and driving.

In some embodiments of the present application, the battery not only can serve as an operating power source of the vehicle 1, but also can serve as a driving power source of the vehicle 1, to provide driving power for the vehicle 1 in place of or partially in place of fuel or natural gas.

In order to meet different power usage requirements, the battery 2 may include a plurality of battery cells. The battery cell refers to a smallest unit that constitutes a battery module or a battery pack. The plurality of battery cells may be connected in series and/or in parallel via electrode terminals to be used in various applications. The battery 2 mentioned in the present application includes a battery module or a battery pack. The plurality of battery cells may be in series connection, parallel connection or series-parallel connection, and the series-parallel connection refers to a combination of series connection and parallel connection. In the embodiments of the present application, the plurality of battery cells may directly constitute a battery pack, or may first constitute a battery module, and then the battery module constitutes the battery pack.

FIG. 2 is a schematic structural diagram of a battery 2 in an embodiment of the present application.

As shown in FIG. 2, the battery includes a battery box (not sown in the figure) and a battery cell (not shown in the figure). The battery cell is contained in a box body 41 of the battery box.

The box body 41 may be a simple three-dimensional structure such as an independent cuboid or cylinder or sphere, and may also be a complex three-dimensional structure formed by combining simple three-dimensional structures such as cuboids or cylinders or spheres. A material of the box body 41 may be an alloy material such as aluminum alloy and iron alloy, may also be a high molecular material such as polycarbonate and polyisocyanurate foam plastic, or may be a composite material of glass fibers and epoxy resin.

The box body 41 is configured to contain the battery cell, and the box body 41 may be of various structures. In some embodiments, the box body 41 may include a second box body 412 and a first box body 411. The second box body 412 and the first box body 411 are covered with each other, and the second box body 412 and the first box body 411 together define a containing space for containing the battery cell 3. The first box body 411 may be of a hollow structure with one end open. The second box body 412 is of a plate-like structure, and the second box body 412 covers an open side of the first box body 411 to form the box body 41 with the containing space. Each of the second box body 412 and the first box body 411 may also be of a hollow structure with one side open. The open side of the second box body 412 covers the open side of the first box body 411 to form the box body 41 with the containing space. Certainly, the second box body 412 and the first box body 411 may be in various shapes such as cylinders and cuboids.

In order to improve the sealing performance after the second box body 412 and the first box body 411 are connected to each other, a sealing member, such as a sealant and a sealing ring, may be further arranged between the second box body 412 and the first box body 411.

Assuming that the second box body 412 covers a top of the first box body 411, the second box body 412 may also be referred to as an upper box cover, and the first box body 411 may also be referred to as a lower box cover.

In the battery 2, there may be either one battery cell or a plurality of battery cells. The plurality of battery cells may be in series connection, parallel connection or series-parallel connection, and the series-parallel connection refers to a combination of series connection and parallel connection in the plurality of battery cells. The plurality of battery cells may be directly connected in series, in parallel, or in hybrid connection, and then the entirety formed by the plurality of battery cells is contained in the box body 41. Certainly, by connecting the plurality of battery cells in series, in parallel, or in hybrid connection to form a battery module 201, and then connecting a plurality of battery modules 201 in series, in parallel, or in hybrid connection to form an entirety, and the entirety is contained in the box body 41.

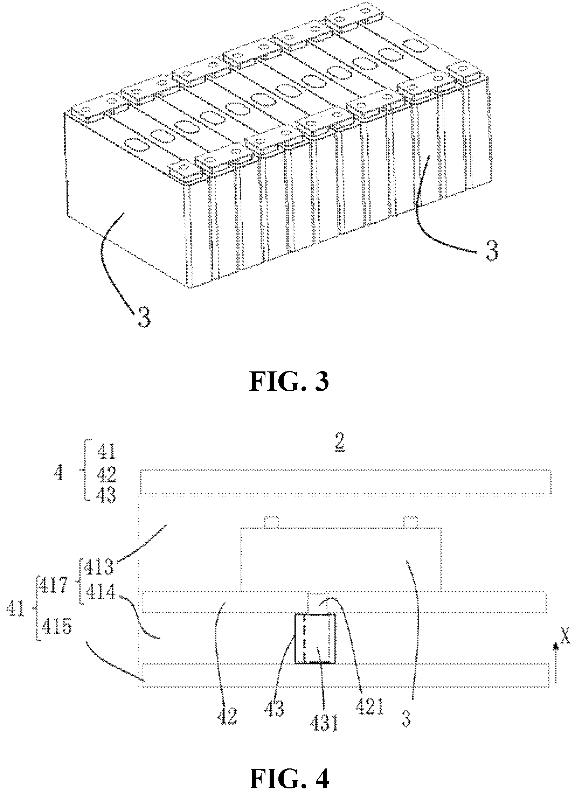

FIG. 3 is a schematic structural diagram of a battery module 201 in an embodiment of the present application.

In some embodiments, as shown in FIG. 2 and FIG. 3, there are a plurality of battery cells 3, and the plurality of battery cells 3 are connected in series, or in parallel, or in series-parallel connection to form a battery module 201. The plurality of battery modules 201 are then connected in series, or in parallel, or in series-parallel connection to form an entirety, which is contained in the battery box 4.

The plurality of battery cells 3 in the battery module 201 may be electrically connected to each other via a busbar component to realize the parallel or series connection or series-parallel connection of the plurality of battery cells 3 in the battery module 201.

In the present application, the battery cell 3 may include a lithium-ion battery cell, a sodium-ion battery cell or a magnesium-ion battery cell, etc., which is not limited in the embodiment of the present application. The battery cell 3 presents a cylinder shape. In the following embodiments, a cylindrical battery cell is taken as an example for description.

Please refer to FIG. 4, FIG. 4 is a section view of a battery according to an embodiment of the present application.

In a first aspect, as shown in FIG. 4, the present application provides a battery box 4. The battery box 4 includes a box body 41, a partition plate 42 and a support member 43. The box body 41 includes a bottom plate 415 and a cavity 417 located above the bottom plate 415. The partition plate 42 is located in the cavity 417 and spaced apart from the bottom plate 415 in a first direction X, so as to divide the cavity 417 into an electrical cavity 413 and an exhaust cavity 414. The electrical cavity 413 is located on the side of the partition plate 42 away from the bottom plate 415. The electrical cavity 413 is configured to contain the battery cell 3. The exhaust cavity 414 is configured to collect emissions from the battery cell 3. The support member 43 is located in the exhaust cavity 414. The support member 43 is supported on the bottom plate 415 and/or the partition plate 42 in the first direction X.

In the solution of the embodiment of the present application, the battery box 4 includes the box body 41, the partition plate 42 and the support member 43. The box body 41 includes the bottom plate 415 and the cavity 417 located above the bottom plate 415. The partition plate 42 is located in the cavity 417 and spaced apart from the bottom plate 415 in the first direction X, so as to divide the cavity 417 into the electrical cavity 413 and the exhaust cavity 414. The electrical cavity 413 is located on the side of the partition plate 42 away from the bottom plate 415. The electrical cavity 413 is configured to contain the battery cell 3. The exhaust cavity 414 is located on the side of the partition plate 42 facing the bottom plate 415. The exhaust cavity 414 is configured to collect emissions from the battery cell 3. The support member 43 is arranged in the exhaust cavity 414. The support member 43 is supported on the bottom plate 415 and/or the partition plate 42 in the first direction X to improve the deformation resistance of the partition plate 42, so as to mitigate the problem that when thermal runaway occurs to a battery 2, the partition plate 42 is bent and deformed under pressure, which leads to a reduction in a volume of the exhaust cavity, resulting in that some of high-temperature ejecta cannot enter the exhaust cavity, and other battery cells 3 are damaged. The reliability of the battery box 4 is improved.

The battery cell 3 is provided with a pressure relief mechanism so as to release internal pressure and substances to the outside through the pressure relief mechanism in the event of thermal runaway of the battery cell 3. The bottom plate 415 does not specifically refer to a wall plate arranged on a gravity side of the battery box 4. After the battery cell 3 is placed in the box body 41, the bottom plate 415 is a wall plate that is arranged opposite to the pressure relief mechanism of the battery cell 3.

Optionally, the box body 41 also includes a top plate and a side plate, the top plate and the bottom plate 415 are arranged opposite to each other, the side plate is connected to the top plate and the bottom plate 415, and the top plate, the bottom plate 415 and the side plate define the cavity 417.

The partition plate 42 is arranged in the cavity 417, and the partition plate 42 and the bottom plate 415 are spaced apart in the first direction X. The partition plate 42 divides the cavity 417 into the electrical cavity 413 and the exhaust cavity 414 in the first direction X. A specific shape and volume of the electrical cavity 413 and the exhaust cavity 414 may be flexibly designed. The electrical cavity 413 is configured to contain the battery cell 3. When the battery cell 3 experiences thermal runaway, the substance inside the battery cell 3 enters the exhaust cavity 414 through the pressure relief mechanism and the partition plate 42.

The exhaust cavity 414 is also internally provided with the support member 43, and the support member 43 is supported on the bottom plate 415 and/or the partition plate 42 in the first direction X. The support member 43 is configured to provide support for the partition plate 42 when thermal runaway occurs to the battery cell 3 and the partition plate 42 is caused to bend toward the exhaust cavity 414, so as to reduce the risk that an exhaust height of the exhaust cavity 414 may be reduced due to bending of the partition plate 42 toward the exhaust cavity 414, and the emissions of the battery cell 3 may overflow into the electrical cavity 413.

Specifically, the support member 43 includes a first end and a second end opposite to each other in the first direction X. The first end of the support member 43 is connected to the bottom plate 415, and the second end extends toward the partition plate 42 in the first direction X, so that when the partition plate 42 bends toward the exhaust cavity 414, the support member 43 can provide support for the partition plate 42 through the second end. Optionally, the second end abuts against the partition plate 42 to improve a supporting effect of the support member 43 on the partition plate 42. Alternatively, the first end of the support member 43 is connected to the partition plate 42, and the second end extends toward the bottom plate 415 in the first direction X, so that when the partition plate 42 bends toward the exhaust cavity 414, the bottom plate 415 is supported on the partition plate 42 through the support member 43. Optionally, the second end abuts against the bottom plate 415 to improve the supporting effect of the support member 43 on the partition plate 42. Alternatively, the first end of the support member 43 is connected to the bottom plate 415, and the second end of the support member 43 is connected to the partition plate 42, so as to improve the supporting effect of the support member 43 on the partition plate 42.

Optionally, the partition plate 42 and/or the bottom plate 415 may be connected to the support member 43 by welding, bonding, snap-fitting, bolting, or riveting.

Optionally, the plurality of support members 43 are arranged in the exhaust cavity 414 so as to improve the supporting effect of the support member 43 on the partition plate 42.

Optionally, the shape of the support member 43 may be flexibly designed. For example, the support member 43 is in a cubic shape.

In some embodiments, as shown in FIG. 4, the partition plate 42 is provided with a pressure relief portion 421, the support member 43 has an avoidance portion 431, and the avoidance portion 431 and the pressure relief portion 421 are opposite to each other in the first direction X.

In these embodiments, the partition plate 42 is provided with the pressure relief portion 421, the pressure relief portion 421 is configured to correspond to a pressure relief structure of the battery cell 3, and the avoidance portion 431 and the pressure relief portion 421 are opposite to each other in the first direction X, so that the emissions from the battery 2 may enter the exhaust cavity 414 via the pressure relief portion 421 and the avoidance portion 431. Thus, by making the avoidance portion 431 of the support member 43 opposite to the pressure relief portion 421 in the first direction X, when the pressure relief portion 421 is not in operation, the support member 43 improves the deformation resistance of the partition plate 42 nearby the pressure relief portion 421, and when the pressure relief portion 421 is in operation, the emissions may rapidly enter the exhaust cavity 414 via the avoidance portion 431. The reliability of the battery box 4 is improved.

The partition plate 42 is provided with the pressure relief portion 421. After the battery cell 3 experiences thermal runaway, the emissions from the battery cell 3 enters the exhaust cavity 414 through the pressure relief portion 421.

An area where the pressure relief portion 421 is located in the partition plate 42 has a lower structural strength than other areas. This makes the pressure relief portion 421 more prone to bending under pressure when the battery cell 3 works normally or undergoes thermal runaway. Therefore, the support member 43 and the area of the pressure relief portion 421 are directly opposite to each other, so that the support member 43 provides better support effect for the partition plate 42 and a probability of bending and deformation of the partition plate 42 in the area of the pressure relief portion 421 is reduced. At the same time, in order to reduce the interference of the support member 43 with the pressure relief process of the pressure relief portion 421, the avoidance portion 431 is arranged in a position of the support member 43 corresponding to the pressure relief portion 421, so that the emissions can smoothly enter the exhaust cavity 414 through the avoidance portion 431.

Optionally, the support member 43 includes a support portion and the avoidance portion 431 which are connected to each other, the avoidance portion 431 and the pressure relief portion 421 are directly opposite to each other in the first direction X, and the support portion is configured to provide the support for the partition plate 42 when the battery cell 3 works normally and the pressure relief portion 421 is in operation.

In some other embodiments, as shown in FIG. 4, the avoidance portion 431 is a first through hole, one end of the first through hole is arranged facing the pressure relief portion 421, and/or the avoidance portion 431 is a meltable channel.

In these embodiments, the avoidance portion 431 is the first through hole, so that the emissions of the battery 2 enter the exhaust cavity 414 through the first through hole via the pressure relief portion 421, a pressure relief speed is improved, the reliability of the battery box 4 is improved, and/or the avoidance portion 431 is the meltable channel, so that the emissions of the battery 2 enter the exhaust cavity 414 by melting the avoidance portion 431 by the pressure relief portion 421, and when the avoidance portion 431 is not melted, the supporting portion provides the better effect of supporting the partition plate 42.

The avoidance portion 431 is the first through hole. One end of the first through hole is arranged facing the pressure relief portion 421, and the other end of the first through hole is arranged on a side surface of the support member 43, so that the emissions of the battery cell 3 is released to the exhaust cavity 414 through the pressure relief portion 421 and the through hole. A shape of the first through hole may be flexibly set, for example, the through hole is a circular hole. Optionally, the support member 43 is made of a flame-retardant and high-temperature-resistant material so as to improve the supporting effect of the support member 43 on the partition plate 42.

Alternatively, the avoidance portion 431 is the meltable channel. A melting temperature of the material of the avoidance portion 431 is lower than a temperature of the emissions. When the battery cell 3 experiences thermal runaway, the high-temperature emissions may melt the avoidance portion 431 after passing through the pressure relief portion 421, thereby connecting the pressure relief portion 421 and the exhaust cavity 414. For example, a material of the meltable channel is polypropylene (PP), polystyrene (PS), polyvinyl chloride (PVC), polyamide (PA), etc.

Alternatively, the support member 43 includes a high-temperature-resistant support portion and the avoidance portion 431. The avoidance portion 431 includes a through hole and a meltable material filling in the through hole, so that the high-temperature emissions melt the meltable material and then enters the exhaust cavity 414 via the through hole. By using the through hole to rationally plan a pressure relief channel for the emissions, the emissions are rapidly released into the exhaust cavity 414 via the through hole while the support member 43 provides a good effect of supporting the partition plate 42 when the battery 2 experiences thermal runaway.

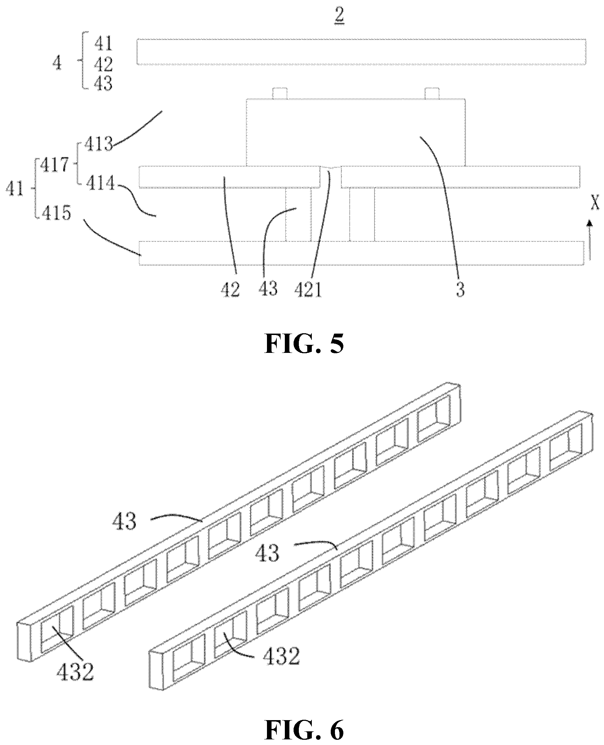

Please refer to FIG. 5, FIG. 5 is a section view of a battery according to another embodiment of the present application.

In some embodiments, as shown in FIG. 5, the partition plate 42 is provided with the pressure relief portion 421, and projections of the support member 43 and the pressure relief portion 421 are staggered in the first direction X.

In these embodiments, the partition plate 42 is provided with the pressure relief portion 421, so that the emissions of the battery cell 3 may enter the exhaust cavity 414 via the pressure relief portion 421, and the projections of the support member 43 and the pressure relief portion 421 in the first direction X are staggered, so that the risk of reduction of the pressure relief efficiency of the battery 2 caused by the support member 43 interfering with the pressure relief portion 421 is reduced.

Optionally, the support member 43 and the pressure relief part 421 are staggered, and the support member 43 cannot be melted by the high-temperature emissions released into the exhaust cavity 414, so as to ensure the supporting effect of the support member 43 on the partition plate 42.

In some embodiments, as shown in FIG. 5, the pressure relief portion 421 includes a pressure relief hole and/or a weak structure.

In these embodiments, the pressure relief portion 421 includes the pressure relief hole so as to improve the pressure relief rate of the battery 2, and/or the pressure relief portion 421 includes the weak structure. When the weak structure is in operation, the emissions of the battery 2 may rapidly enter the exhaust cavity 414 via the pressure relief portion 421, and integrity of the electrical cavity 413 can be improved when the weak structure is not in operation.

The pressure relief portion 421 is the pressure relief hole. The pressure relief mechanism of the battery cell 3 corresponds to the pressure relief hole so that when the battery 2 undergoes thermal runaway, the emissions enter the exhaust cavity 414 via the pressure relief hole. The pressure relief portion 421 in the form of a through hole can accelerate the pressure relief speed of the battery 2.

The pressure relief portion 421 is of the weak structure. Specifically, the partition plate 42 is provided with a pressure relief area corresponding to the pressure relief structure of the battery cell 3. The weak structure refers to the fact that a thickness of the partition plate 42 in the pressure relief area is less than a thickness of the partition plate 42 in other areas, or a weakening groove is formed in the pressure relief area, or a through hole is formed in the pressure relief area. The weak structure is a cover plate welded or bonded to the through hole so that when the battery cell 3 undergoes thermal runaway, the emissions can break through the weak structure and enter the exhaust cavity 414.

Please refer to FIG. 6, FIG. 6 is a schematic structural diagram of a support member of a battery box according to an embodiment of the present application.

In some embodiments, as shown in FIG. 5 and FIG. 6, the support member 43 includes a second through hole 432 penetrating therethrough in a second direction Y or a third direction Z, and a plane formed by the second direction Y and the third direction Z is perpendicular to the first direction X.

In these embodiments, the support member 43 includes the second through hole 432 penetrating therethrough in the second direction Y or the third direction Z, so that a weight and material cost of the support member 43 can be reduced, gas can conveniently pass through the support member 43, a gas pressure in the exhaust cavity 414 is rapidly balanced, and a containing effect of the exhaust cavity 414 for the emissions of the battery 2 is improved.

The support member 43 extends in the second direction Y, and the second through hole 432 is provided through the support member 43 in the third direction Z, and/or the support member 43 extends in the third direction Z, and the second through hole 432 is provided through the support member 43 in the second direction Y. By using the second through hole 432 in the support member 43, the emissions can diffuse to the surrounding area via the second through hole 432 after entering the exhaust cavity 414, thereby reducing the interference of the support member 43 with the emissions.

Optionally, A shape of the second through hole 432 may be flexibly set, for example, the second through hole 432 is rectangular or circular. The shapes and sizes of the second through holes 432 located in one support member 43 may be the same or different.

Optionally, an extension direction and length of each support member 43 are the same, and the second through holes 432 on each support member 43 are evenly arranged so that the force in each position of the support member 43 is uniform and the service life of the support member 43 is prolonged.

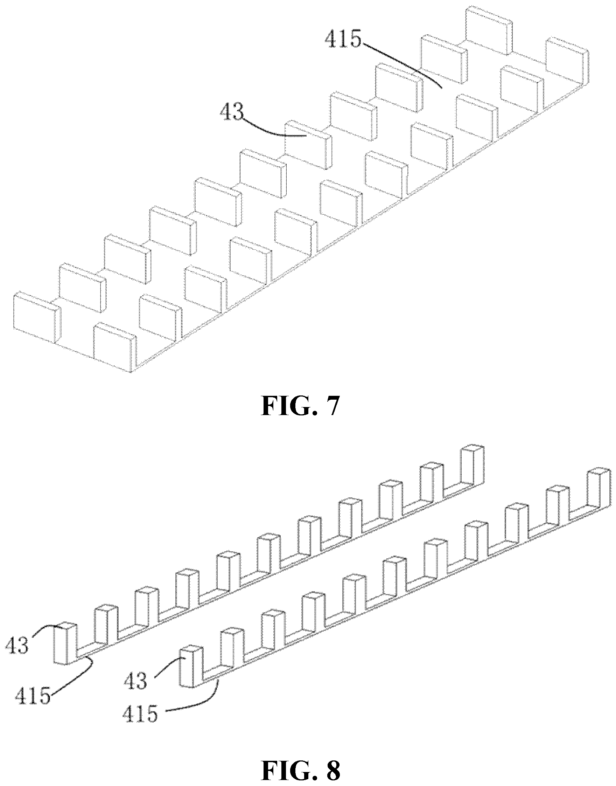

Please refer to FIG. 7 and FIG. 8, FIG. 7 is a schematic partial structural diagram of a battery box according to an embodiment of the present application, and FIG. 8 is a schematic partial structural diagram of a battery box according to an embodiment of the present application.

In some embodiments, as shown in FIG. 5, FIG. 7 and FIG. 8, a plurality of support members 43 are arranged at intervals.

In these embodiments, the plurality of support members 43 are arranged at intervals, so as to reduce interference of the support members 43 with gas in the exhaust cavity 414, conveniently and rapidly balance the gas pressure in the exhaust cavity 414 and reduce the risk that the emissions overflow into the electrical cavity 413 caused by too high pressure in the exhaust cavity 414.

Optionally, the shape of the support members 43 may be flexibly designed. For example, the support member 43 is in a cylindrical or cubic shape.

Optionally, the support members 43 are spaced equidistantly so that the emissions can evenly diffuse through gaps between the support members 43.

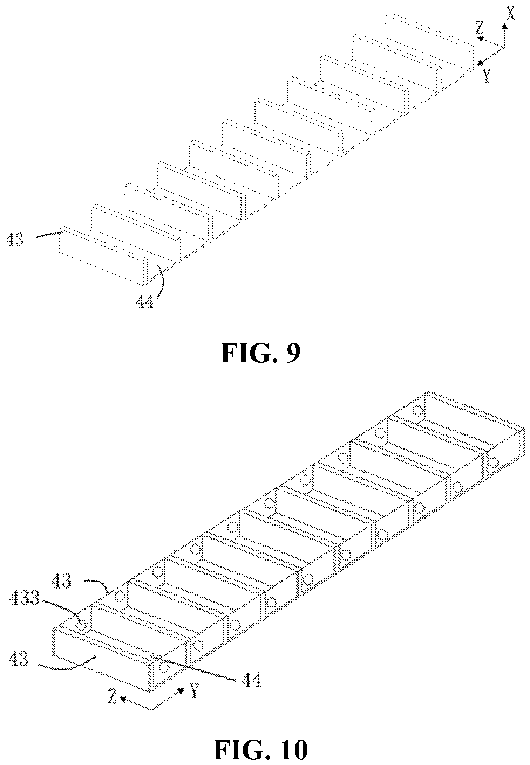

Please refer to FIG. 9 and FIG. 10, FIG. 9 is a schematic partial structural diagram of a battery box according to an embodiment of the present application, and FIG. 10 is a schematic partial structural diagram of a battery box according to an embodiment of the present application.

In some embodiments, as shown in FIG. 5, FIG. 9 and FIG. 10, the partition plate 42 is provided with a plurality of pressure relief holes distributed in array in the second direction Y and/or the third direction Z, the first direction X, the second direction Y and the third direction Z intersecting pairwise, and the support members 43 are arranged between the pressure relief holes adjacent to each other in the second direction Y or the third direction Z.

In these embodiments, the partition plate 42 is provided with the plurality of pressure relief holes distributed in array in the second direction Y and/or the third direction Z. The support members 43 are arranged between the pressure relief holes adjacent to each other in the second direction Y or the third direction Z. The pressure relief holes of the runaway battery cell 3 and pressure relief holes of a normal battery cell 3 are separated by the support members to reduce the impact of the runaway battery cell 3 on the normal battery cell 3.

The pressure relief hole in this embodiment is the pressure relief portion 421 in the above embodiment.

The partition plate 42 is provided with the plurality of pressure relief holes distributed in array in the second direction Y and/or the third direction Z, each pressure relief hole corresponds to the pressure relief mechanism of the battery cell 3, and thus when the battery cell 3 undergoes thermal runaway, the emissions of the battery cell 3 enters the exhaust cavity 414 via the pressure relief holes.

The support members 43 are disposed between the adjacent pressure relief holes so that when some of the battery cells 3 experience thermal runaway, the support members 43 can separate the emissions of the faulty battery cell 3 from the normal battery cell 3, thereby reducing the risk of spread and aggravation of thermal runaway inside the battery 2 caused by the damage to the normal battery 2.

Optionally, the pressure relief holes are spaced apart in the second direction Y and the third direction Z, and support members 43 are disposed between the adjacent pressure relief holes in the second direction Y or the third direction Z, so that after the emissions enter the exhaust cavity 414, the support members 43 block the emissions from affecting the normal battery 2 in one of the second direction Y or the third direction Z, and the emissions diffuse in the other direction of the second direction Y or the third direction Z within the exhaust cavity 414.

Optionally, as shown in FIG. 10, the pressure relief holes are spaced apart in the second direction Y or the third direction Z, and the support members 43 are arranged between the adjacent pressure relief holes in the second direction Y or the third direction Z. Vent holes 434 are formed in the support members 43 arranged in the second direction Y or the third direction Z so that the pressure in the exhaust cavity 414 can diffuse to other areas through the vent holes 434.

In some embodiments, as shown in FIG. 5 and FIG. 9, the box body 41 further includes a connecting plate 44, and at least two support members 43 are connected through the connecting plate 44.

In these embodiments, the box body 41 further includes the connecting plate 44, and at least two support members 43 are connected through the connecting plate 44. The connecting plate 44 plays a role in integrating and supporting the support member 43, so as to conveniently mount and dismount the support members 43.

At least two support members 43 are connected to the connecting plate 44, and the connecting plate 44 is connected to the bottom plate 415. Therefore, the support member 43 is connected to the box body 41 through the connecting plate 44. A projection of each support member 43 in the first direction X is located within the connecting plate 44. The connection plate 44 is used to improve the connection reliability between the support member 43 and the bottom plate 415.

By integrating the support members 43, the assembly steps of the support members 43 and the box body 41 are simplified, and the assembly time is reduced.

In some embodiments, as shown in FIG. 5, the battery 2 further includes a side plate, the side plate is connected to the bottom plate 415, and the support member 43 is connected to at least one of the bottom plate 415, partition plate 42 or the side plate.

In these embodiments, the battery 2 further includes the side plate, the side plate is connected to the bottom plate 415, and by connecting the support member 43 to at least one of the bottom plate 415, the partition plate 42 or the side plate, the support members 43 can play a role in enhancing the structural strength of the box body 41 and/or the partition plate 42.

The support members 43 may also be connected to the bottom plate 415 or the side plate so that the support members 43 can play a role in supporting the bottom plate 415 or the side plate, and the risk of deformation of the bottom plate 415 or the side plate under external force is reduced.

Specifically, the support members 43 extend within the exhaust cavity 414 and are connected to the bottom plate 415, the side plate, and the partition plate 42.

In a second aspect, an embodiment of the present application provides a battery, including a battery cell and a battery box according to the embodiment of the first aspect, wherein the battery cell is arranged in an electrical cavity, a partition plate is provided with a pressure relief portion, and a pressure relief structure of the battery cell and the pressure relief portion are opposite to each other in a thickness direction of the partition plate.

In a third aspect, an embodiment of the present application provides an electrical apparatus, including the battery according to the embodiment of the second aspect.

In some embodiments, as shown in FIG. 1 to FIG. 10, the present application provides a battery box 4. The battery box 4 includes a box body 41, a partition plate 42, a support member 43 and a connecting plate 44. The box body 41 includes a bottom plate 415 and a cavity 417 located above the bottom plate 415. The partition plate 42 is located in the cavity 417 and spaced apart from the bottom plate 415 in a first direction X, so as to divide the cavity 417 into an electrical cavity 413 and an exhaust cavity 414. The electrical cavity 413 is located on the side of the partition plate 42 away from the bottom plate 415. The electrical cavity 413 is configured to contain a battery cell 3. The exhaust cavity 414 is configured to collect emissions from the battery cell 3. The support member 43 is located in the exhaust cavity 414. A plurality of support members 43 are arranged at intervals. The support members 43 are supported on the bottom plate 415 and/or the partition plate 42 in the first direction X. The partition plate 42 is provided with the pressure relief portion 421. The pressure relief portion 421 includes a pressure relief hole, and projections of the support members 43 and the pressure relief portion 421 are staggered in the first direction X. The support members 43 include through holes penetrating therethrough in the second direction Y or the third direction Z. A plane formed by the second direction Y and the third direction Z is perpendicular to the first direction X. Alternatively, the partition plate 42 is provided with the plurality of pressure relief holes distributed in array in the second direction Y and/or the third direction Z. The first direction X, the second direction Y and the third direction Z intersect pairwise. Each support member 43 is arranged between the pressure relief holes adjacent to each other in the second direction Y or the third direction Z. At least two support members 43 are connected through the connecting plate 44.

In the solution of the embodiment of the present application, the battery box 4 includes the box body 41, the partition plate 42 and the support member 43. The box body 41 includes the bottom plate 415 and the cavity 417 located above the bottom plate 415. The partition plate 42 is located in the cavity 417 and spaced apart from the bottom plate 415 in the first direction X, so as to divide the cavity 417 into the electrical cavity 413 and the exhaust cavity 414. The electrical cavity 413 is located on the side of the partition plate 42 away from the bottom plate 415. The electrical cavity 413 is configured to contain the battery cell 3. The exhaust cavity 414 is located on the side of the partition plate 42 facing the bottom plate 415. The exhaust cavity 414 is configured to collect emissions from the battery cell 3. The support member 43 is arranged in the exhaust cavity 414. The support member 43 is supported on the bottom plate 415 and/or the partition plate 42 in the first direction X to improve the deformation resistance of the partition plate 42, so as to mitigate the problem that when thermal runaway occurs to a battery 2, the partition plate 42 is bent and deformed under pressure, which leads to a reduction in a volume of the exhaust cavity, resulting in that some of high-temperature ejecta cannot enter the exhaust cavity, and other battery cells 3 are damaged. The reliability of the battery box 4 is improved.

Finally, it should be noted that: the above examples are merely used for illustrating rather than limiting the technical solutions of the present application. Although the present application has been described in detail with reference to the various afore-mentioned examples, those of ordinary skill in the art should understand that the technical solutions specified in the various aforementioned examples can still be modified, or some or all of the technical features can be equivalently substituted; and such modifications or substitutions do not make the essence of the corresponding technical solutions depart from the scope of the technical solutions of the various examples of the present application, which shall fall within the scope of the claims and the specification of the present application. In particular, the technical features mentioned in the various embodiments can be combined in any manner provided that there is no structural conflict. The present application is not limited to the specific examples disclosed herein, but includes all technical solutions falling within the scope of the claims.

## Claims

1. A battery box, comprising:
a box body, comprising a bottom plate and a cavity located above the bottom plate;
a partition plate, wherein the partition plate is located in the cavity and spaced apart from the bottom plate in a first direction, so as to divide the cavity into an electrical cavity and an exhaust cavity, the electrical cavity is located on the side of the partition plate away from the bottom plate, the electrical cavity is configured to contain a battery cell, and the exhaust cavity is configured to collect emissions from the battery cell; and
a support member, wherein the support member is located in the exhaust cavity and is supported on the bottom plate and/or the partition plate in the first direction.

2. The battery box according to claim 1, wherein the partition plate is provided with a pressure relief portion, the support member has an avoidance portion, and the avoidance portion and the pressure relief portion are opposite to each other in the first direction.

3. The battery box according to claim 2, wherein the avoidance portion is a first through hole, one end of the through hole is arranged facing the pressure relief portion, and/or the avoidance portion is a meltable channel.

4. The battery box according to any one of claims 1 to 3, wherein the partition plate is provided with a pressure relief portion, and projections of the support member and the pressure relief portion are staggered in the first direction.

5. The battery box according to any one of claims 2 to 4, wherein the pressure relief portion comprises a pressure relief hole and/or a weak structure.

6. The battery box according to any one of claims 1 to 5, wherein the support member comprises a second through hole penetrating therethrough in a second direction or a third direction, and a plane formed by the second direction and the third direction is perpendicular to the first direction.

7. The battery box according to any one of claims 1 to 6, wherein a plurality of support members are arranged at intervals.

8. The battery box according to claim 7, wherein the partition plate is provided with a plurality of pressure relief holes distributed in array in the second direction and/or the third direction, the first direction, the second direction and the third direction intersecting pairwise, and
the support members are arranged between the pressure relief holes adjacent to each other in the second direction or the third direction.

9. The battery box according to claim 8, wherein the box body further comprises a connecting plate, and at least two support members are connected through the connecting plate.

10. The battery box according to any one of claims 1 to 9, wherein the battery further comprises a side plate, the side plate is connected to the bottom plate, and the support member is connected to at least one of the bottom plate, the partition plate and the side plate.

11. A battery, comprising a battery cell and the battery box according to any one of claims 1 to 10, wherein the battery cell is arranged in the electrical cavity, the partition plate is provided with a pressure relief portion, and a pressure relief structure of the battery cell and the pressure relief portion are opposite to each other in a thickness direction of the partition plate.

12. An electrical apparatus, comprising the battery according to claim 11.
